# EUROPEAN PATENT APPLICATION

(11) **EP 4 749 492 A1**
(43) Date of publication of application: **27.05.2026**
(21) Application number: 25188580.2
(22) Date of filing: 09.07.2025
(51) Int. Cl.: G06F 21/57, G06F 9/4401, G06F 21/62, G06F 9/455

(54) **DRY-RUN BOOT PROCESS TO DETERMINE UPDATED CONFIGURATION VALUES**

(30) Priority: 22.11.2024 US 202418957267
(71) Applicant: Red Hat, LLC, Raleigh, NC 27601 (US)
(72) Inventor: ELIE-DIT-COSAQUE, David, Raleigh, 27601 (US); RAMSAY, James, Raleigh, 27601 (US); KASHTAN, Yuval, Raleigh, 27601 (US)
(74) Representative: Murgitroyd & Company

(57) **Abstract**

A virtual machine including a security module is initialized, wherein the virtual machine utilizes a boot process configuration that is to be utilized by a computing device. The computing device accesses a configuration value derived by the security module within the virtual machine. The configuration value is associated with a decryption key that is operable to decrypt data stored on a storage device. A boot process action of the computing device is implemented based on the configuration value.

## Description

### BACKGROUND

Computing systems are rebooted regularly for maintenance, software updates, security patches, or other purposes causing repetitive encryption and decryption of data during the reboot process.

### SUMMARY

The present disclosure is generally directed to mechanisms for initiating a dry-run boot process to determine updated configuration values.

In aspects of the disclosure, a method, system and non-transitory computer-readable storage according to the claims are provided.

In one aspect, a method is provided. The method includes causing, by a computing device, a virtual machine including a security module to be initialized, wherein the virtual machine utilizes a boot process configuration that is to be utilized by the computing device. The method further includes accessing, by the computing device, a configuration value derived by the security module within the virtual machine, the configuration value being associated with a decryption key that is operable to decrypt data stored on a storage device. The method further includes implementing, by the computing device, a boot process action of the computing device based on the configuration value.

Implementing the boot process action may comprise initiating a computing system boot process.

Implementing the boot process action may comprise terminating a computing system boot process.

The method may further comprise, based on the configuration value, outputting, to a display device, a prompt that is indicative of an alternative option to decrypt the data stored on the storage device.

The method may further comprise receiving, in response to the prompt, user input associated with an alternative decryption key operable to decrypt the data stored on the storage device.

Receiving the user input may comprise receiving a user passphrase that is operable to decrypt the data stored on the storage device.

Accessing the configuration value may comprise obtaining the configuration value from a platform configuration register (PCR).

The method may further comprise storing the configuration value in the security module, wherein the computing device accesses the configuration value from the security module.

The method may further comprise initializing the security module by initializing a trusted platform module (TPM), the TPM comprising at least one of a hardware chip or a software module.

The method may further comprise detecting a changed configuration value, and, based on the changed configuration value, initializing the virtual machine and the security module.

The method may further comprise storing the changed configuration value in the security module, and, in response to storing the changed configuration value, updating an encryption specification of the storage device, wherein the encryption specification comprises decryption options to decrypt the data stored on the storage device.

In another aspect, a computing device is provided. The computing device includes a memory, and a processor device coupled to the memory. The processor device is configured to cause a virtual machine including a security module to be initialized, wherein the virtual machine utilizes a boot process configuration that is to be utilized by the computing device. The processor device is further configured to access a configuration value derived by the security module within the virtual machine, the configuration value being associated with a decryption key that is operable to decrypt data stored on a storage device. The processor device is further configured to implement a boot process action of the computing device based on the configuration value.

To implement the boot process, the one or more processor devices may be configured to initiate a computing system boot process.

To implement the boot process, the one or more processor devices may be configured to terminate a computing system boot process.

The one or more processor devices may be further configured to, based on the configuration value, output, to a display device, a prompt that is indicative of an alternative option to decrypt the data stored on the storage device.

The one or more processor devices may be further configured to receive, in response to the prompt, user input associated with an alternative decryption key operable to decrypt the data stored on the storage device.

To receive the user input, the one or more processor devices may be configured to receive a user passphrase that is operable to decrypt the data stored on the storage device.

To access the configuration value, the one or more processor devices may be configured to obtain the configuration value from a platform configuration register (PCR).

The configuration value may be stored in the security module, and the one or more processor devices may be configured to access the configuration value from the security module.

The security module may be initialized by the one or more processor devices, or another device, initializing a trusted platform module (TPM), the TPM comprising at least one of a hardware chip or a software module.

The one or more processor devices may be further configured to detect a changed configuration value, and, based on the changed configuration value, initialize the virtual machine and the security module.

The changed configuration value may be stored in the security module by the one or more processor devices, or another device, and, in response to storing the changed configuration value, the one or more processor devices, or another device, may update an encryption specification of the storage device, wherein the encryption specification comprises decryption options to decrypt the data stored on the storage device.

In another aspect, a non-transitory computer-readable storage medium is provided. The non-transitory computer-readable storage medium includes executable instructions to cause one or more processor devices of a computing device to cause a virtual machine including a security module to be initialized, wherein the virtual machine utilizes a boot process configuration that is to be utilized by the computing device. The instructions further cause the one or more processor devices to access a configuration value derived by the security module within the virtual machine, the configuration value being associated with a decryption key that is operable to decrypt data stored on a storage device. The instructions further cause the one or more processor devices to implement a boot process action of the computing device based on the configuration value.

To implement the boot process, the one or more processor devices may be caused to initiate a computing system boot process.

To implement the boot process, the one or more processor devices may be caused to terminate a computing system boot process.

The one or more processor devices may be further caused to, based on the configuration value, output, to a display device, a prompt that is indicative of an alternative option to decrypt the data stored on the storage device.

The one or more processor devices may be further caused to receive, in response to the prompt, user input associated with an alternative decryption key operable to decrypt the data stored on the storage device.

To receive the user input, the one or more processor devices may be caused to receive a user passphrase that is operable to decrypt the data stored on the storage device.

To access the configuration value, the one or more processor devices may be caused to obtain the configuration value from a platform configuration register (PCR).

The configuration value may be stored in the security module, and the one or more processor devices may be caused to access the configuration value from the security module.

The security module may be initialized by the one or more processor devices, or another device, initializing a trusted platform module (TPM), the TPM comprising at least one of a hardware chip or a software module.

The one or more processor devices may be further caused to detect a changed configuration value, and, based on the changed configuration value, initialize the virtual machine and the security module.

The changed configuration value may be stored in the security module by the one or more processor devices, or another device, and, in response to storing the changed configuration value, the one or more processor devices, or another device, may update an encryption specification of the storage device, wherein the encryption specification comprises decryption options to decrypt the data stored on the storage device.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of an environment in which a dry-run boot process to determine updated configuration values may be practiced;
Figure 2 is a sequence flow diagram illustrating actions taken by and messages communicated between certain components illustrated in Figure 1 to initiate a dry-run boot process for a computing system according to some implementations;
Figure 3 is a flowchart diagram of a method for initiating a dry-run boot process to determine updated configuration values according to some implementations;
Figure 4 is a simplified block diagram of the environment illustrated in Figure 1 according to one implementation; and
Figure 5 is a block diagram of a computing device suitable for implementing examples disclosed herein according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples and claims are not limited to any particular sequence or order of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

The boot process, or reboot process, to switch on a server or other computing device includes switching on the server via hardware or software and starting the operating system (OS). A non-limiting example of switching on a server via hardware can include pressing a button on the server. A non-limiting example of switching on a server via software can include executing one or more software commands. However, after the server is switched on, the central processing unit (CPU) typically does not have any data stored in the main memory and must first load data into the memory before the boot process can continue. Boot configuration software configured to run each time the server is started or restarted may be responsible for loading all relevant OS data into the main memory. The relevant OS data may be included in a boot partition within an encrypted partition of the server. In order to load the OS and all relevant OS data into main memory, the partition must first be decrypted before continuing the boot process.

A security module such as a trusted platform module (TPM) can be used to encrypt and decrypt a disk. For instance, the security module can generate bindings that include encryption keys, decryption keys, and configuration values that represent a state of the software running on the system. The configuration values can be stored within configuration registers, where each of the configuration registers are associated with particular software running on the computing device. The encryption keys and decryption keys can be bound to a configuration value identifying the state of the software. The security module can implement access policies that limit access to the encryption keys and decryption keys that match bindings of the configuration values. In some instances, changes to the state of the boot configuration software can cause a change to the configuration value indicating an updated state. The change to the configuration value can cause the encryption key and decryption key to be updated due to the encryption key and decryption key being bound to the configuration value. For instance, the security module may generate an updated binding that binds a new (e.g., updated) configuration value to an updated encryption key and an updated decryption key in response to a change in the boot configuration software, such as a software update.

Typically, when the computing device reboots to apply the software update, a default binding, such as user credentials that include a username and password, can be provided by a user to decrypt the disk. However, in instances where a global software update is applied across hundreds or thousands of servers, manual entry of a username and password can be inefficient or impractical.

Programmatically predicting the updated configuration value, and in turn determining the updated decryption key to decrypt the disk, can be cumbersome and problematic as well because the updated configuration value for a boot configuration software is determined at the time of reboot when the new state is detected. Incorrectly predicting the configuration value may result in an inability to decrypt a partition of the disk. As mentioned, an alternative method to decrypt one or more partitions of the disk may include using a user's password or passphrase and may be impractical due to maintaining and entering passwords for large cloud systems that include hundreds or thousands of servers where each is subject to regular reboot processes. Furthermore, utilizing a single password/passphrase can increase the risk of the unauthorized access to a plurality of servers sharing the same password/passphrase if compromised.

Advantageously, the examples set forth below include systems and methods that can initiate a dry-run boot process to determine updated configuration values by initializing a virtual machine using a boot process configuration from a computing device. A boot process configuration can include the configuration of partitions on a disk where boot configuration software and relevant data for the boot configuration software is stored. The new (or updated) configuration value can be determined by allowing the virtual machine to implement the boot process configuration within the virtual machine and by providing the configuration value to the computing device such that the computing device can implement a boot process using the new configuration value to decrypt data. An advantage of running the boot process software using the boot process configuration for disks within the virtual machine is that the boot process configuration can enable the boot process software to execute until the configuration values can be determined as if the boot process software was running directly on the computing device. This guarantees that the configuration value is correct, thereby eliminating the need for predictive measures.

After the updated configuration values have been determined, the configuration values may be stored in a security module running in the virtual machine from which the computing device can read during a reboot. The security module running in the virtual machine can include a virtual security module that includes software. The security module can also include a physical chip security module in the hardware devices that run the virtual machine. The physical chip security module and the virtual security module running in the virtual machine can provide similar functionality for the virtual machine. In some instances, the configuration values can be passed back to a security module within the computing device for use during the reboot. Once the computing device has successfully decrypted the disk, the virtual machine can terminate.

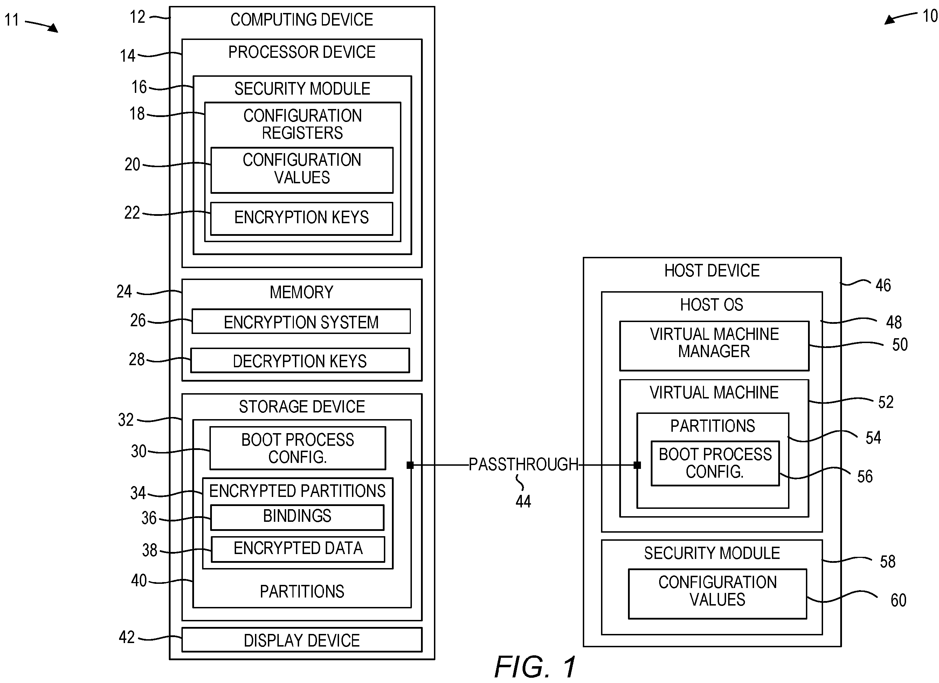

Figure 1 is a block diagram of an environment in which mechanisms for initiating a dry-run boot process for a computing system may be practiced. A computing environment 10 includes a computing system 11 that includes one or more computing devices 12. The computing device 12 may comprise any computing or electronic device capable of including firmware, hardware, and/or executing software instructions to implement the functionality described herein, such as a computer server, a desktop computing device, a laptop computing device, a smartphone, a computing tablet, or the like. Each computing device 12 of the computing environment 10 can include one or more processor devices 14, memories 24, storage devices 32, or display devices 42.

The computing device 12 can include a security module 16. The security module 16 can include a microcontroller designed to secure hardware within a computing system through integrated cryptographic keys. For example, the security module 16 can include a trusted platform module (TPM) and may be a physical chip that is part of the processor device 14 or tightly physically coupled to the processor device 14 such as residing on a motherboard. In some implementations, the security module 16 may be a software module that is stored as firmware in the memory 24 of the computing device 12. A software security module is executed during the boot process of the computing device 12.

The security module 16 can include configuration registers 18 that store configuration values which represent integrity measurements of software code. The integrity measurements of software code can include the software state for various software running on the computing device 12. Non-limiting examples of integrity measurements can include measuring and detecting changes in software components such as dynamic loaders, shared libraries, executable files, and the like. Example configuration registers 18 can include platform configuration registers (PCR), or the like. The configuration registers 18 can include one or more registers associated with respective software. In particular, the configuration registers 18 can include one or more registers associated with a boot process software responsible for loading the operating system (OS) and all of the data needed by the OS to boot the computing device 12. Example boot process software includes GNU GRUB bootloader, Windows^{®} Boot Manager, Lilo, etc. For instance, in the context of the GNU GRUB bootloader, PCR registers 8 and 9 are associated with the GNU GRUB bootloader and measure the software state that interacts with the kernel and all files read including the kernel image. A non-limiting example of measuring the software state of the GNU GRUB bootloader can include detecting a change in the virtual console (e.g., screen) font and size. The configuration values 20 (e.g., PCR register values) can be stored in the respective configuration registers 18 within the security module 16.

The configuration values 20 within the configuration registers 18 can be updated by the associated software when a change in software state is detected. For instance, the boot process software can be updated to a new version. The computing device 12 is rebooted to implement the changes resulting from the update. During the reboot process, the boot process software can update the associated configuration values 20 to indicate the updated version of the boot process software.

The security module 16 can also store encryption keys 22 for encrypting data in an encrypted partition 34 of the computing device 12. The encryption keys 22 can include a cryptographic key that is bound to a particular configuration value 20 for encrypting data on the encrypted partition 34. By way of example, the security module 16 can include a configuration register 18 associated with the boot process software that stores a configuration value 20 associated with the current state of the boot process software. Based on the configuration value 20, the security module 16 can generate an encryption key 22 and a decryption key 28 that is bound to the configuration value 20. As such, any changes to the configuration value 20 will cause a new binding (e.g., encryption key, decryption key, etc.) to be generated for encrypting and decrypting encrypted data 38 relevant to the boot process software on an encrypted partition 34. Encrypted data 38 can be stored in the encrypted partition 34 and include a representation of the boot process software and/or data associated with the boot process software. Example representations may include, but are not limited to a ciphertext representation.

The memory 24 may include an encryption system 26. The encryption system 26 can include a block device encryption subsystem configured to encrypt and decrypt the encrypted partition 34 using encryption keys 22 and decryption keys 28. One example of an encryption system 26 is dm-crypt, available at docs.kernel.org/admin-guide/device-mapper/dm-crypt.html, which can encrypt whole disks (including removable media), partitions, software RAID volumes, logical volumes, as well as files. The encryption system 26 can receive encryption keys 22 from the security module 16 and encrypt one or more encrypted partitions 34 within the partitions 40 based on bindings 36.

The encrypted partition 34 can include divisions of the partitions 40 within the storage device 32 that separate units by operating systems (OSs) and file systems. For instance, the boot configuration software can require access to the OS software of the computing device 12 and to the relevant data to load both into the memory 24 during the boot process. By way of a non-limiting example, the GNU GRUB boot configuration software can be associated with two configuration values such as PCR register values 8 and 9 representing the OS software and relevant data respectively. The PCR register values 8 and 9 can be stored in encrypted partition 34 on the encrypted partition 34.

The encrypted partition 34 implemented in the partition 40 can indicate a boot process configuration 30 for the boot process configuration software. The boot process configuration 30 can indicate the respective encrypted partition 34 of the partitions 40 that store encrypted data 38 such as the OS and relevant OS data of the boot process configuration software that are encrypted and stored in the storage system 32. A non-limiting example of the boot process configuration 30 can indicate that GNS GRUB relies on a basic input/output system (BIOS) boot partition wherein the BIOS boot partition stores parts of the GNU GRUB bootloader software in the encrypted partition 34.

The encrypted partition 34 can store bindings 36. The bindings 36 can include an unencrypted header for each encrypted partition 34 that allows for multiple encryption options. Encryption options can include encryption keys 22 that are stored along with encryption parameters, such as cipher type and key size which describe the encryption keys 22. For instance, the bindings 36 can facilitate encryption of data within a respective partition 34 using at least one of the encryption keys 22 used by the encryption system 26. The bindings 36 can conversely facilitate decryption of the encrypted data 38 within the encrypted partition 34 using one or more decryption options. Decryption options can include decryption keys 28. For instance, the binding 36 can include a decryption key 28 generated by the security module 16 and include a user passphrase decryption option. Both the generated decryption key 28 and the passphrase decryption option are operable to decrypt the encrypted data 38 within a particular encrypted partition 34 of the partitions 40.

However, in order to decrypt the encrypted data 38 within the encrypted partition 34, the security module 16 may need to provide the encryption system 26 with decryption keys 28 that match the bindings 36 stored in the encrypted partition 34. Decryption keys 28 can include a piece of information, such as a string of numbers or letters, which, when processed through a cryptographic algorithm, can encode or decode cryptographic data such as the encrypted data 38 within the encrypted partition 34. As described, the encryption keys 22 and decryption keys 28 can be based on the configuration value 20 associated with one or more encrypted partitions 34 within the partitions 40. The encrypted data 38 can be encrypted by the encryption keys 22 and decrypted by the decryption keys 28.

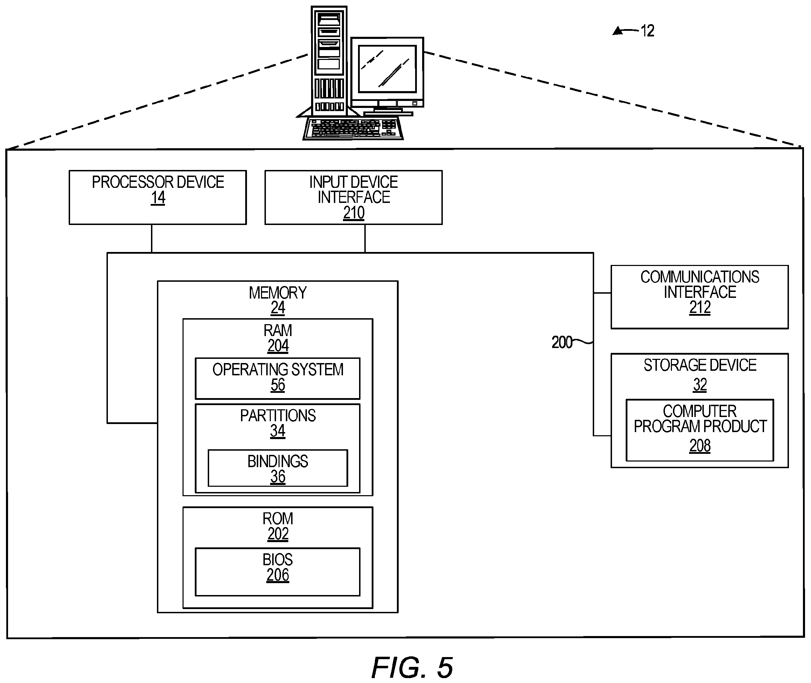

In order to determine the correct configuration value 20 and decryption keys 22, the computing device 12 can cause a virtual machine 52 to be initialized on a host device 46. The host device 46 can include a physical machine that allocates computing resources to run the virtual machine 52. While the host device 46 illustrated in Figure 1 is shown as being implemented as a separate device, in other implementations, the virtual machine 52 can be executed on the computing device 12. For instance, the host device 46 can be, can comprise, can be comprised by, or can otherwise share one or more properties with a computing device 12. For example, the host device 46 can in some instances have any property described above with respect to the computing device 12. The computing device 12 can execute one or more processes (e.g., virtual machine 52, host OS 48, VMM 50, etc.) to cause the host device 46 to be initialized. Additional example implementation details for a computing device 12 are provided below with respect to Figure 5.

The host device 46 can include a computing device for hosting one or more virtual machines. The host device 46 can include a host operating system (OS) 48. A virtual machine monitor (VMM) 50 can execute within the host OS 48. The VMM 50 (e.g., hypervisor, virtualizer, etc.) can implement a virtualized environment via VM virtualization technology on the host device 46. The VMM 50 can perform various functions, such as initializing, running, monitoring, configuring, overseeing, or otherwise managing one or more virtual machines (VMs) 52 operating within the host OS 48. As used herein, the terms "virtual machine monitor" and "hypervisor" can be considered interchangeable, and any action described as being performed by a virtual machine monitor 50 can be performed by a hypervisor and vice versa. A hypervisor can include, for example, a "bare metal" hypervisor running directly on native hardware; a "hosted" or "type 2" hypervisor (e.g., Quick Emulator (QEMU)) running on a host operating system (e.g., Red Hat Enterprise Linux, etc.); a kernel-based hypervisor module to cause a host operating system 48 to function as a hypervisor (e.g., Kernel-based Virtual Machine (KVM) hypervisor); and the like.

The virtual machine 52 can include, for example, an executing process to emulate a computing system or device. The virtual machine 52 can, for example, run one or more processes (e.g., guest operating system processes, boot process software, etc.) using virtual hardware (e.g., virtual memory, virtual processor device, etc.) mapped to physical hardware of the host device 46 by a virtual machine monitor 50.

Upon initiating the virtual machine 52, the virtual machine 52 may utilize the boot process configurations 56 by receiving the partitions 54 via a passthrough socket 44. The boot process configurations 56 may include similar properties as the boot process configurations 30 such as indicating the partitions 54 associated with the boot process software of the encrypted partition 34.

The passthrough socket 44 can include any process communication channels (e.g., file, signal, pipe, socket, message queue, message passing protocol, shared memory, etc.), or other method for transferring data. For example, the passthrough socket 44 can include a mechanism for facilitating communications between the computing device 12 and the virtual machine 52 to access the storage device 32 and/or the security module 16. One example of a mechanism for facilitating communications between the computing device 12 and the virtual machine 52 to access the storage device 32 and/or the security module 16 include a TPM passthrough available at https://qemu-project.gitlab.io/qemu/specs/tpm.html. Another passthrough socket 44 can include computing instructions such as "kvm: qemu-system-x86_64 -drive file=/dev/sdX,readonly=on,format=raw" to facilitate communications between the computing device 12 and the virtual machine 52 to access the storage device 32. In yet another example, the passthrough socket 44 can include mechanisms to communicate from VM 52 to the computing device 12 to allow the computing device 12 to retrieve the configuration value 58. An example of mechanisms to communicate from VM 52 to the computing device 12 to allow the computing device 12 to retrieve the configuration value 58 can include but are not limited to connecting to a console of the VM 52 and executing tpmread commands.

The virtual machine 52 can for example copy the partitions 40 from the computing device 12 and implement the partitions 54 within the virtual machine 52. As such, the partitions 54 can have any property described above with respect to the partitions 40 within the computing device 12. The boot process configurations 56 can include the configuration of the encrypted partitions 34 within the partitions 40 of the storage device 32 that are associated with the boot process software. For instance, once initiated, the virtual machine 52 can include partitions 54 and boot process configurations 56 that mirror the partitions 40 of the computing device 12. As such, the virtual machine 52 can perform a dry-run boot process that performs boot operations similar to boot operations of the computing device 12. In this manner, the virtual machine 52 can initiate a dry-run boot process of the computing device 12.

The host device 46 can include a security module 58. The security module 58 can include similar properties as the security module 16. The security module 58 can also store configuration values 60. The configuration values 60 can include similar properties as the configuration values 20. However, the configuration values 60 may be updated by the boot process software to reflect a current state of the version of the boot configuration software based on being initiated within the virtual machine 52. Similar to the security module 16, the security module 58 may store the updated configuration values 60 and generate encryption keys 22 and decryption keys 28 that are bound to the configuration values 60. In some instances, the configuration value 60 can be passed to the security module 16 to update the configuration registers 18 where the security module 16 can utilize the configuration value 60 to generate a new binding of encryption keys 22 and decryption keys 28.

With this background, an example of initiating a dry-run boot process for a computing system will be described. Assume that the computing device 12 receives a software update to update the boot process software such as the GNU GRUB bootloader to the latest version. A user navigates to a terminal application such as a command line interface running on the computing device 12. The user types a command such as "sudo update-grub" into the terminal using a keyboard and executes the command to update the GNU GRUB bootloader by selecting the enter key on the keyboard to update the boot process software. Once the update finishes, the user decides to reboot the computing device 12 to apply the updated boot process software immediately.

As the computing device 12 powers off and begins to power on, the GNU GRUB bootloader software is initiated. Prior to the GNU GRUB bootloader beginning the process of loading the OS and relevant OS data into the memory 24 on the computing device 12, the computing device 12 causes the virtual machine 52 to be initialized and provides, via the passthrough socket 44, the partitions 54 within the partitions 40 of the storage device 32. The partitions 54 include the boot process configuration 56, which indicates the respective encrypted partition 34 specific to the GNU GRUB bootloader software that are read from the partitions 40 and implemented within the virtual machine 52.

The virtual machine 52 executes a dry-run of the boot process by executing the GNU GRUB bootloader until the GNU GRUB bootloader updates (e.g., determines) the configuration values 60 for the updated version of the GNU GRUB bootloader. The configuration values 60 are stored in the security module 58 within the host device 46. Once the configuration values 60 have been determined, the computing device 12 accesses the configuration values 60 by reading directly from the security module 58 or by updating, via the passthrough socket 44, the configuration values 20 within the security module 16 running on the computing device 12. With the configuration values 60 that correspond to the updated version of the GNU GRUB bootloader, the computing device 12 implements a boot process action. The boot process action includes determining, based on the configuration value 60, the decryption keys 28 to decrypt the encrypted data 38 within the encrypted partition 34 associated with GNU GRUB bootloader.

As discussed previously, once decrypted, the boot process software can proceed to loading the OS and relevant data into the memory 24. Alternatively, in the event that the dry-run boot process was unsuccessful and the configuration value 60 is not accessible to the computing device 12 due to a passthrough 44 error or other error, the encryption system 26 can iterate through the bindings 36 to identify alternative decryption options to decrypt the encrypted data 38. For instance, in response to the configuration value 60 not being accessible, the encryption system 26 can output to the display device 42 a prompt that allows the user to enter a passphrase or password to decrypt the encrypted data 38 within the encrypted partition 34. For instance, the encrypted partition 34 can include a passphrase binding 36 associated with the respective encrypted partition 34 of the boot process software.

In this event, the user utilizes the keyboard to enter one or more characters of the passphrase and selects the enter key on the keyboard to submit the passphrase. Based on the user submitting the correct passphrase, the encrypted data 38 within the encrypted partition 34 is decrypted, and the GNU GRUB bootloader proceeds to the next boot process action.

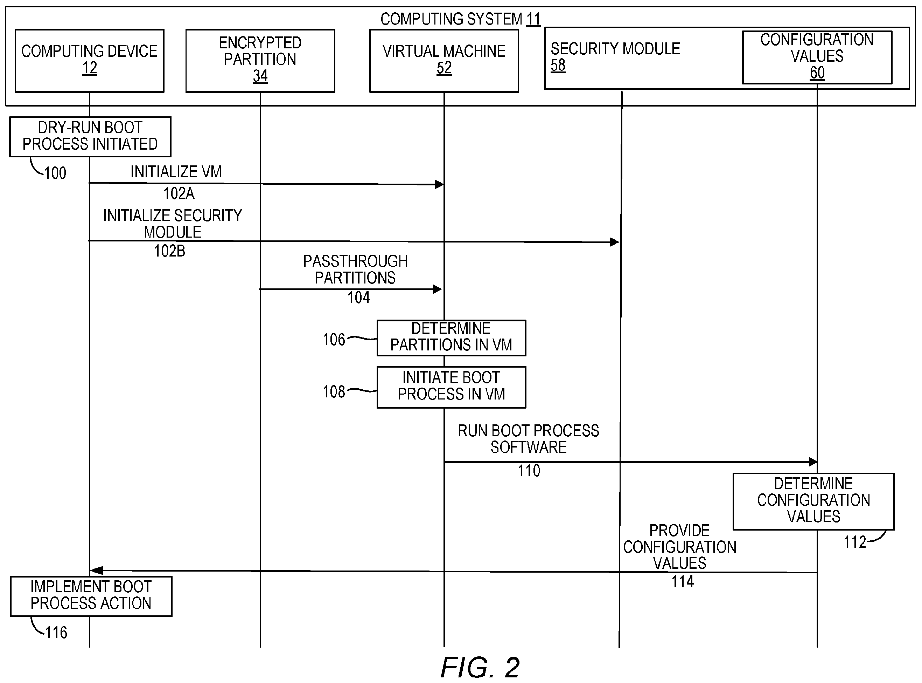

Figure 2 is a sequence flow diagram illustrating actions taken by and data communicated between certain components illustrated in Figure 1 to initiate a dry-run boot process for a computing system according to some implementations. Although Figure 2 depicts steps in a particular order for purposes of illustration and discussion, the present disclosure is not limited to the particular illustrated order or arrangement. For example, various steps can be omitted, added, rearranged, or otherwise modified without deviating from the scope of the present disclosure.

The computing device 12 initiates a dry-run boot process (Figure 2, step 100). For example, the computing device 12 may require a reboot to apply changes to a boot process software operable to implement a boot process for the computing device 12. The changes may include software version updates, security patches, etc. To ensure that the boot process software can access data needed to boot the computing device 12, the computing device 12 initiates the dry-run boot process to determine the configuration value 60 associated with the changed boot software.

The computing device 12 causes the virtual machine 52 to be initialized (Figure 2, step 102A). The computing device 12 may cause the virtual machine 52 to be initiated by initiating the virtual machine 52 on the computing device 12. In other implementations, the computing device 12 may cause the virtual machine 52 be initiated by instructing the host device 46 to initiate the virtual machine 52.

The computing device 12 causes the security module 58 to be initialized (Figure 2, step 102B). For instance, the security module 58 can be a virtual security module (e.g., a virtual trusted platform module (vTPM), etc.) included within the firmware of the virtual machine 52. The computing device causes the security module 58 to be initialized (e.g., virtual security module, etc.) concurrently during the initialization of the virtual machine 52. In some instances, the security module 58 can be stored within the host OS 48 such that, during initialization of the virtual machine 52, the security module 58 is also initialized. While examples herein describe a virtual security module 58, the present disclosure is not limited to such examples. For instance, the security module 58 can include a physical chip associated with a processor associated with the virtual machine 52.

The computing device 12 passes the encrypted partition 34 to the VM 52 included within the encrypted partition 34 of the computing device 12 (Figure 2, step 104). For instance, the encrypted partition 34 may indicate the block data storage units on the encrypted partition 34. The computing device 12 utilizes a passthrough socket 44 to transfer or otherwise allow the virtual machine 52 to access the encrypted partition 34. In some instances, the virtual machine 52 copies the encrypted partition 34 from the encrypted partition 34.

The virtual machine 52 implements the partitions 54 within the virtual machine 52 (Figure 2, step 106). For instance, during initialization, the virtual machine 52 initiates a boot process to boot the virtual machine 52 (Figure 2, step 108). During the boot process, the virtual machine 52 utilizes the boot process configuration 56 to identify the partitions 54 associated with the boot process software included within the partitions 54 to run the boot process software within the virtual machine 52 (Figure 2, step 110). For example, the boot process software can be the same boot process software that was updated on the computing device 12. The virtual machine 52 implements the partitions 54, determines the boot process configurations 56 to determine the respective partitions 54 that are associated with the updated boot process software, and runs the boot process software within the virtual machine 52 during initialization.

By way of example, during initialization, the virtual machine 52 can copy the encrypted partitions 40 from the partition 40, determine, based on the copied partitions 54, the boot process configuration 56 indicating respective partitions 54 associated with the boot process OS and the relevant OS data and initiate the boot process for the virtual machine 52 by running the boot process software within the virtual machine 52.

The virtual machine 52 runs the boot process software until the configuration values 60 are determined using a hashing algorithm (Figure 2, step 112). The security module 58 determines a digest. The digest can be based on log events such as one or more updates to the boot process software. The digest is a numeric representation of the log events computed by a cryptographic hash algorithm or a function. The security module 58 concatenates the digest indicating the change in software state with the previous or existing configuration value to determine the updated or new configuration value 60. In some instances, the concatenated configuration values can be used as input to the hash algorithm, which computes a digest of the input, and the input is the determined configuration value 60. For instance, the boot process software will update the configuration value 60 within the security module 58 based on the log events indicating an updated version detected by the virtual machine 52. Once the configuration value 60 has been updated (e.g., determined), the configuration value 60 is stored in the security module 58. The security module 58 can include configuration registers similar to the configuration registers 18 stored within the security module 16 included in the computing device 12. As such, the configuration registers stored in the security module 58 can also include configuration registers associated with the boot process software. The configuration registers are updated by the boot process software to reflect the configuration value 60 (e.g., the updated boot process software state) when the boot process software is run within the virtual machine 52.

The computing device 12 accesses the configuration value 60 (Figure 2, step 114). For instance, the computing device 12 accesses the configuration value 60 via the passthrough socket 44. In some instances, the computing device 12 accesses the configuration value 60 and updates the configuration register 18 to include the configuration value 60. In this manner, the computing device 12 has access to the configuration value 60 associated with the current state of the boot process software.

This allows the computing device 12 to implement a boot process action (Figure 2, step 116) to boot the computing device 12. For instance, the security module 16 associated with the computing device 12 utilizes the configuration value 60 to generate an updated binding 36 that binds the encryption key 22 and decryption key 28 to the configuration value 60. Based on the configuration value 60 satisfying the access policy, such as a matching software state, the security module 16 releases the decryption key 28 to decrypt the encrypted data 38 within the encrypted partition 34. The access policy can indicate that the decryption key 28 can only be released if a binding 36 that matches the configuration value 60 is presented to the security module 16. Accordingly, the computing device 12 can implement a boot action process to decrypt the encrypted data 38 within encrypted partition 34 including the encrypted partitions 34 associated with the boot process software and proceed to loading the OS and relevant OS data into the memory 24.

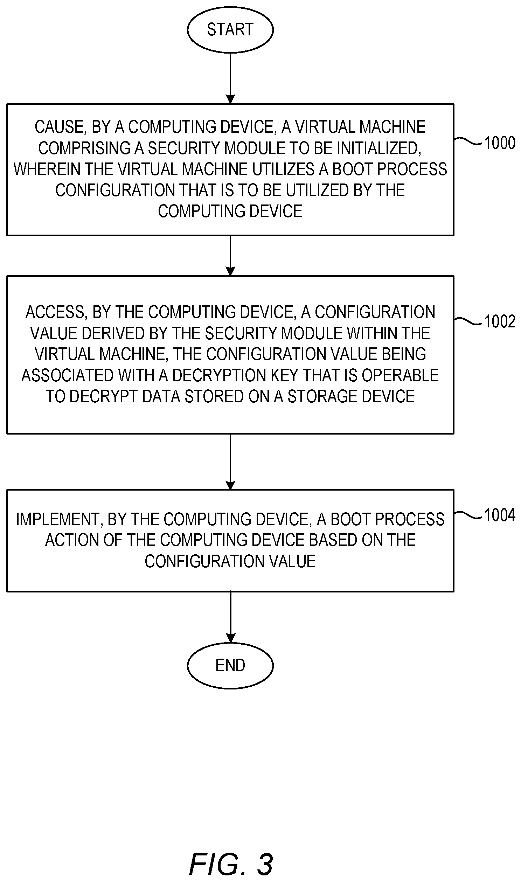

Figure 3 is a flowchart diagram of a method for initiating a dry-run boot process for a computing system according to some implementations. Although Figure 3 depicts steps in a particular order for purposes of illustration and discussion, the present disclosure is not limited to the particularly illustrated order or arrangement. For example, various steps can be omitted, added, rearranged, or otherwise modified without deviating from the scope of the present disclosure.

The computing device 12 causes a virtual machine 52 including the security module 58 to be initialized utilizing a boot process configuration 56 for the computing device 12 (Figure 3, block 1000). The computing device 12 accesses a configuration value 60 derived by the security module 58 within the virtual machine 52. The configuration value 60 is associated with a decryption key 28 that is operable to decrypt the encrypted data 38 stored on the storage device 32 (Figure 3, block 1002). The computing device 12 implements a boot process action to boot or reboot the computing device 12 based on the configuration value 60 (Figure 3, block 1004).

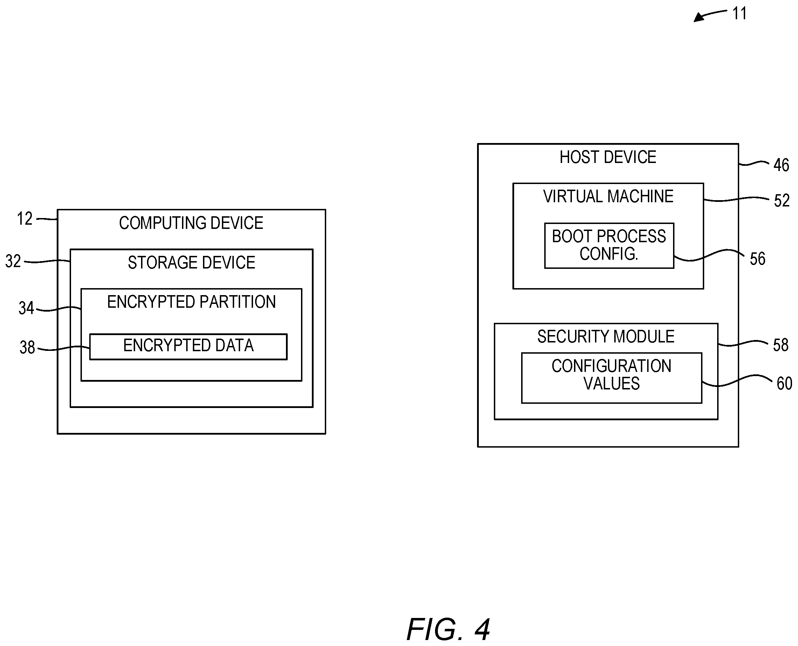

Figure 4 is a simplified block diagram of the environment illustrated in Figure 1 according to one implementation. The computing system 11 includes one or more computing devices 12 and one or more host devices 46. The one or more computing devices 12 are to cause a virtual machine 52 that includes a security module 58 to be initialized using the boot process configuration 56 from the one or more computing devices 12. The one or more computing devices 12 are to access a configuration value 60 derived by the security module 58. The configuration value 60 is associated with the decryption key 28 operable to decrypt the encrypted data 38 stored in the encrypted partition 34 of the storage device 32 within the one or more computing devices 12. The one or more computing devices 12 are to implement a boot process action to boot the one or more computing devices 12 based on the configuration value 60.

Figure 5 is a block diagram of the computing device 12 suitable for implementing examples according to one example. The computing device 12 may comprise any computing or electronic device capable of including firmware, hardware, and/or executing software instructions to implement the functionality described herein, such as a computer server, a desktop computing device, a laptop computing device, a smartphone, a computing tablet, or the like. The computing device 12 includes the processor device 14, the system memory 24, and a system bus 200. The system bus 200 provides an interface for system components including, but not limited to, the system memory 24 and the processor device 14. The processor device 14 can be any commercially available or proprietary processor.

The system bus 200 may be any of several types of bus structures that may further interconnect to a memory bus (with or without a memory controller), a peripheral bus, and/or a local bus using any of a variety of commercially available bus architectures. The system memory 24 may include non-volatile memory 202 (e.g., read-only memory (ROM), erasable programmable read-only memory (EPROM), electrically erasable programmable read-only memory (EEPROM), etc.), and volatile memory 204 (e.g., random-access memory (RAM)). A basic input/output system (BIOS) 206 may be stored in the non-volatile memory 202 and can include the basic routines that help to transfer information between elements within the computing device 12. The volatile memory 204 may also include a highspeed RAM, such as static RAM, for caching data.

The computing device 12 may further include or be coupled to a non-transitory computer-readable storage medium such as the storage device 32, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 32 and other drives associated with computer-readable media and computer-usable media may provide non-volatile storage of data, data structures, computer-executable instructions, and the like.

A number of modules can be stored in the storage device 32 and in the volatile memory 204, including an operating system 214 and one or more program modules, such as the encryption system 26, which may implement the functionality described herein in whole or in part. All or a portion of the examples may be implemented as a computer program product 208 stored on a transitory or non-transitory computer-usable or computer-readable storage medium, such as the storage device 32, which includes complex programming instructions, such as complex computer-readable program code, to cause the processor device 14 to carry out the steps described herein. Thus, the computer-readable program code can comprise software instructions for implementing the functionality of the examples described herein when executed on the processor device 14. The processor device 14, in conjunction with the encryption system 26 in the volatile memory 204, may serve as a controller, or control system, for the computing device 12 that is to implement the functionality described herein.

An operator, such as a user, may also be able to enter one or more passwords/passphrases through a keyboard (not illustrated), a pointing device such as a mouse (not illustrated), or a touch-sensitive surface such as a display device. Such input devices may be connected to the processor device 14 through an input device interface 210 that is coupled to the system bus 200 but can be connected by other interfaces such as a parallel port, an Institute of Electrical and Electronic Engineers (IEEE) 1394 serial port, a Universal Serial Bus (USB) port, an IR interface, and the like. The computing device 12 may also include a communications interface 212, such as an Ethernet transceiver and/or a Wi-Fi^{®} transceiver, or the like, suitable for communicating with the network as appropriate or desired.

Individuals will recognize improvements and modifications to the preferred examples of the disclosure. All such improvements and modifications are considered within the scope of the concepts disclosed herein and the claims that follow.

## Claims

1. A method, comprising:
causing, by a computing device, a virtual machine comprising a security module to be initialized, wherein the virtual machine utilizes a boot process configuration that is to be utilized by the computing device;
accessing, by the computing device, a configuration value derived by the security module within the virtual machine, the configuration value being associated with a decryption key that is operable to decrypt data stored on a storage device; and
implementing, by the computing device, a boot process action of the computing device based on the configuration value.

2. The method of claim 1, wherein implementing the boot process action comprises initiating a computing system boot process.

3. The method of claim 1, wherein implementing the boot process action comprises terminating a computing system boot process.

4. The method of claim 1, further comprising:
based on the configuration value, outputting, to a display device, a prompt that is indicative of an alternative option to decrypt the data stored on the storage device.

5. The method of claim 4, further comprising:
receiving, in response to the prompt, user input associated with an alternative decryption key operable to decrypt the data stored on the storage device.

6. The method of claim 5, wherein receiving the user input comprises receiving a user passphrase that is operable to decrypt the data stored on the storage device.

7. The method of claim 1, wherein accessing the configuration value comprises obtaining the configuration value from a platform configuration register (PCR).

8. The method of claim 1, further comprising:
storing the configuration value in the security module, wherein the computing device accesses the configuration value from the security module.

9. The method of claim 1, further comprising initializing the security module by initializing a trusted platform module (TPM), the TPM comprising at least one of a hardware chip or a software module.

10. The method of claim 1, further comprising:
detecting a changed configuration value; and
based on the changed configuration value, initializing the virtual machine and the security module.

11. The method of claim 10, further comprising:
storing the changed configuration value in the security module; and
in response to storing the changed configuration value, updating an encryption specification of the storage device, wherein the encryption specification comprises decryption options to decrypt the data stored on the storage device.

12. A computing device, comprising:
one or more processor devices configured to carry out the method of any of claims 1 to 11.

13. A non-transitory computer-readable storage medium that stores executable instructions to cause one or more processor devices of a computing device to carry out the method of any of claims 1 to 11.
